(19) **Europäisches Patentamt**
**European Patent Office**
**Office européen des brevets**

(11) **EP 3 458 327 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(21) Anmeldenummer: **17736557.4**

(22) Anmeldetag: **16.05.2017**

(51) Int Cl.:
*B60W 50/08* (2020.01)     *B60K 6/48* (2007.10)
*B60W 10/06* (2006.01)     *B60W 10/08* (2006.01)
*B60W 20/10* (2016.01)

(86) Internationale Anmeldenummer:
**PCT/DE2017/000132**

(87) Internationale Veröffentlichungsnummer:
**WO 2017/198246 (23.11.2017 Gazette 2017/47)**

(54) **VERFAHREN ZUM STEUERN DES ANTRIEBSSTRANGS EINES HYBRID-KRAFTFAHRZEUGS SOWIE VORRICHTUNG ZUR DURCHFÜHRUNG DES VERFAHRENS, INSBESONDERE BEI EINEM TRIKE**

METHOD FOR CONTROLLING THE DRIVE TRAIN OF A HYBRID MOTOR VEHICLE AND DEVICE FOR CARRYING OUT THE METHOD, IN PARTICULAR IN A TRIKE

PROCÉDÉ DE COMMANDE DE LA CHAÎNE CINÉMATIQUE D'UN VÉHICULE AUTOMOBILE HYBRIDE AINSI QUE DISPOSITIF PERMETTANT LA MISE EN OEUVRE DU PROCÉDÉ, EN PARTICULIER POUR UNE MOTOCYCLETTE À TROIS ROUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2016 DE 102016006098**

(43) Veröffentlichungstag der Anmeldung:
**27.03.2019 Patentblatt 2019/13**

(73) Patentinhaber:
• **Vix, Martin**
  **4853 Riken (CH)**
• **Gonzalez, Imelda**
  **4853 Riken (CH)**

(72) Erfinder: **VIX, Martin**
  **4853 Riken (CH)**

(74) Vertreter: **Hermann, Wolf-Dieter**
**Rechtsanwalt & Patentanwalt**
**Beethovenstrasse 3**
**68165 Mannheim (DE)**

(56) Entgegenhaltungen:
**EP-A2- 0 903 258    US-A1- 2013 218 383**

EP 3 458 327 B1

**Beschreibung**

Die Erfindung betrifft ein Steuerungs-Verfahren für den mindestens einen Elektromotor sowie mindestens einen Verbrennungsmotor aufweisenden Antriebsstrang eines Hybrid-Kraftfahrzeugs nach dem Oberbegriff des Patentanspruchs 1, um erfindungsgemäß alleine mit Hilfe des Elektromotors bis zu 150 km völlig abgasfrei und darüber hinaus ohne Reichweiten-Beschränkung mit einem Maximal-Verbrauch des Verbrennungsmotors von 1,5 l/100 km abgasminimiert fahren zu können.

Seit dem 1. September 2014 gilt europaweit bei der Typ-Prüfung für neue Personenkraftfahrzeuge die Euro-6-Norm, die seit dem 1. September 2015 auch für alle neu zugelassenen Kraftfahrzeuge bindend ist.

Diese europäische Abgasnorm legt für Kraftfahrzeuge relativ ambitionierte Grenzwerte für Kohlenstoffmonoxid, Stickstoffoxide, Kohlenwasserstoffe und Partikel enthaltende Abgase fest. Ein Fahrzeughersteller muss die Einhaltung dieser Grenzwerte für eine festgelegte Zeitspanne und Kilometerleistung garantieren.

Ein mit flüssigen Verbrennungskraftstoffen betriebener Verbrennungsmotor (z.B. Dieselmotor, Ottomotor)ist immer noch der meistverbreitete Antrieb bei Kraftfahrzeugen, insbesondere deshalb, weil sich mit einer einzigen Tankfüllung eine weit größere Reichweite erzielen lässt als mit der Aufladungskapazität eines den Elektromotor speisenden Elektrische-Energie-Speichers (z.B. Akkumulator, Superkondensator). Zudem ist die Durchführung einer Nachbetankung im Vergleich zur Nachladung eines Elektrische-Energie-Speichers immer noch zeitsparender und komfortabler.

Nachteilig ist jedoch der beim Verbrennungsvorgang erzeugte Abgas- und Feinpartikel-Ausstoß, insbesondere von Kohlendioxid, Stickoxiden, Kohlenwasserstoffen und sonstigen, vornehmlich feinteiligen Schadstoffen im Nanometer-Bereich, was zu Umweltbelastungen sowie Gesundheitsproblemen beim Menschen führen kann.

Der alternativ ersetzende oder ergänzende Einsatz von Elektromotoren wird aufgrund des Vorhandenseins leichter und kapazitätsstarker Energiespeicher, z.B. von Lithium-Batterien und Superkondensatoren, bei Kraftfahrzeugen zunehmend gebräuchlicher, insbesondere im kombinierten Einsatz mit Verbrennungsmotoren in Hybrid-Kraftfahrzeugen. Nachteilig bleiben gleichwohl die relativ teuren und schweren Akkumulatoren von bis zu mehreren 100 kg, die gegenüber verbrennungsmotorbetriebenen Kraftfahrzeugen immer noch sehr begrenzten geringeren Reichweiten sowie die hierdurch erforderlichen höheren Wiederaufladungs-Frequenzen und/oder die Vorhaltung von Relaisstationen zum Austausch entladener Akkumulatoren. Es sind zwar bereits schnell wiederaufladbare Akkumulatoren verfügbar, was jedoch zu Lasten von deren Lebensdauer geht. Zudem kann ein Akkumulator bei 80% Entladung bislang maximal ca. 2000 Mal wieder nachgeladen werden.

Der Elektroantrieb ist dem verbreiteten Antrieb mit Verbrennungsmotoren jedoch in verschiedenen Eigenschaften auch überlegen. Dazu zählen beispielsweise seine vorteilhafte Drehmoment- und Leistungscharakteristik, der zumeist einfachere Aufbau des Antriebsstrangs und die fast vollständige lokale Emissionsfreiheit in Bezug auf Schadstoffe und Lärm. Ebenso treten weniger Vibrationen auf als bei herkömmlich als Kolbenmotoren arbeitenden Verbrennungskraftmaschinen. Elektromotoren benötigen mit ihrem deutlich besseren Wirkungsgrad und bei Abwesenheit von Leerlauf-Verlusten auch deutlich weniger Energie.

Im Stand der Technik wird versucht, den Reichweiten-Nachteil der elektromotorischen Antriebe mit Extender-Lösungen (z.B. Fa. Getrag KG, Fa. Bosch GmbH)auszugleichen. Hierbei wird im Kraftfahrzeug zusätzlich entweder ein separater Verbrennungsmotor im Getriebe oder ein Gleichstrom erzeugender Verbrennungsgenerator als Ladegerät für den Akkumulator eingebaut. Der Reichweiten-Extender wird aber nicht dafür verwendet, die Antriebsleistung des Kraftfahrzeugs zu erhöhen und ist auch nicht stark genug, um die während des Fahrbetriebs insgesamt benötigte Energie zu erzeugen. Durch den Einbau eines derartigen Zusatzgenerators bei Elektrofahrzeugen wird zwar die Reichweite erhöht, bleibt aber gegenüber mit Verbrennungsmotor betriebenen Fahrzeugen immer noch begrenzt.

Das US-Patentdokument 2013/0218383 A1 offenbart einen seriellen Hybridantrieb, dessen Antriebsräder durch einen von einem elektrischen Energiespeicher gespeisten elektrischen Antrieb angetrieben werden und dessen Verbrennungsmotor als Reichweite verlängernder Range Extender ausgestaltet ist, wobei dessen generatorbetriebene Stromerzeugung den elektrischen Energiespeicher speist. Zur Steuerung der Leistungsabgabe des Verbrennungsmotors in Abhängigkeit von der Fahrgeschwindigkeit wird - ausgehend von einem modellhaft vorgegebenen Leistungsbedarf - der in der vorgegebenen Fahrsituation (Bergauffahrt, Bergabfahrt, Beschleunigungsphase, Bremsphase) tatsächlich benötigte Leistungsbedarf ermittelt und die Differenz zwischen dem modellhaft vorgegebenen und dem tatsächlichen Leistungsbedarf bestimmt und der Verbrennungsmotor entsprechend der sich ergebenden Leistungsdifferenz betrieben. Es erfolgt somit eine kontinuierliche Anpassung der Leistungsabgabe des als Range Extender arbeitenden Verbrennungsmotors über die Differenz zwischen seinem idealen Leistungsbedarf und einem realen Leistungsbedarf gemäß konkret vorliegender Fahrsituation. Hierbei wird der tatsächliche Leistungsbedarf anhand verschiedener Sensorsignale bzw. Zustandsabfragen, insbesondere des Ladezustands sowie der Stromzufuhr bzw. der Stromentnahme des elektrischen Energiespeichers sowie mittels sensorgesteuerter Zustandsabfrage des Gaspedals oder Bremspedals ermittelt.

Das EP-Patentdokument 0903 258 A2 betrifft ein Hybrid-Kraftfahrzeug mit einen speziell ausgebildeten System zur Rekuperation kinetischer Energie in elektrische Energie, wobei bei einer durch Kraftstoffzufuhrbeendigung ausgelösten Verzögerung des Kraftfahrzeugs abhängig von dessen Geschwindigkeit und abhängig von der Restkapazität einer Speichervorrichtung für elektrische Energie sowie abhängig von der Temperatur einer Antriebsregelschaltung von einer Motorregeleinheit Regenerierungsgrößen generiert werden und wobei eine durch diese beaufschlagte und diese verarbeitende Verbrennungsmotor-Steuereinheit eine Pumpverlust-Kontrolleinrichtung so steuert, dass die Pumpverluste des Verbrennungsmotors so gering wie möglich werden.

Aus der DE 10 2011 002 742 A1 und DE 102 60 435 A1 sind Verfahren bekannt, die offenbaren, wie während der Fahrt mit Hilfe einer elektrischen Kupplung ein Verbrennungsmotor zum Elektromotor dazu- oder weggeschaltet werden kann, ohne den Fahrkomfort zu beeinträchtigen. Dabei wird sowohl die Leistung des Elektromotors während des Schließens der elektrischen Kupplung kurzzeitig zum Starten des Verbrennungsmotors erhöht und gegebenenfalls das Getriebe zurückgeschaltet. Nachdem der Verbrennungsmotor gestartet und die erforderliche Leistung erbracht wurde oder vollständig getrennt wurde, ist dieses Verfahren beendet.

Aus der DE 10038181 B4 ist ein Verfahren bekannt, wie bei einem Hybridantrieb mit mindestens einem Elektroantriebsaggregat auf die einzelnen Antriebe wirkende Drehmoment-Sollwerte ermittelt und nach Fahrerwunsch sowie nach Fahrzeug-Betriebsgrößen auf die Antriebe verteilt werden können. Dabei wird auch offenbart, dass Bremsenergie rückgewinnbar ist und/oder während des Betriebes der Verbrennungsmotor zur Ladung eines Akkumulators benutzt werden kann.

Aus der DE 4324010 C2 ist ein Verfahren zur Steuerung der Drehmomentabgabe eines Hybridantriebs bekannt, wodurch es einem Kraftfahrzeugführer möglich ist, mittels einer einfachen Einstellvorrichtung zwischen Elektroantrieb und Hybridantrieb zu wechseln, so dass das Fahrzeug auch rein elektrisch sowie kraftstoffsparend betrieben werden kann.

Im Stand der Technik werden zum geforderten Gesamtantriebs-Drehmoment eines Hybridfahrzeugs beitragende Drehmomentabgaben des Verbrennungsmotors und des Elektromotors zwar hocheffizient, aber auch hochkomplex auf die einzelnen Antriebe verteilt. Da diese Verteilung auch noch von einem zwischengeschalteten Getriebe beeinflusst wird, ergeben sich recht aufwendige Steuerverfahren, welche verschiedene Betriebszustände unterscheiden müssen und zudem sehr spezifisch mit einzelnen Fahrzeugkomponenten zusammenwirken.

Zudem lassen es die bislang bekannten Verfahren nicht zu, im Hinblick auf die Einhaltung von Abgasnormen bereits zertifizierte Einzellösungen miteinander zu kombinieren, um damit zu wesentlich einfacheren und unproblematischeren Entwicklungen eines Kraftfahrzeugs zu gelangen oder um diese Einzellösungen auch für andere Fahrzeuge verwenden zu können.

Da nach den einzuhaltenden Euro-Abgasnormen Abgas-Emissionen in Gramm pro Km definiert werden, bedeutet dies, dass jede Motorvariante für einen Fahrzeugtyp (z.B. VW Golf, Passat, Polo etc.) am jeweiligen Fahrzeug einzeln geprüft werden muss. Im Fall irgendwelcher Veränderungen an Fahrzeugen, insbesondere Änderungen an Fahrzeugteilen (z.B. Motor, Karosserie usw.) müssen somit die Prüfungen immer wiederholt werden, da bei einem anderen Motor oder selbst bei baugleichen Motoren aufgrund veränderter Karosserieformen unterschiedliche Abgaswerte auftreten können. Bei den vielen bestehenden Motorvarianten pro Fahrzeugtyp und den verschiedenen Fahrzeugtypen selbst steigt die Anzahl erforderlicher Prüfungen damit erheblich an.

Auch hier versucht die Erfindung, Abhilfe zu schaffen, d.h. die bei einem Fahrzeugtyp erforderliche Anzahl von Abgastests zu reduzieren.

Es ist bekannt, dass mechanische Energien, welche in einem System enthalten sind, grundsätzlich wieder verwendbar sind bzw. in elektrische Energie zurückgewonnen werden können. Allerdings gehen mit der Umwandlung zwangsläufig immer thermische Verluste einher. Rückgewinnbare Energien bei Fahrzeugen sind die durch dynamische Beschleunigungen erreichten kinetischen Energien sowie die bei Bergauffahrten gewonnenen potentiellen Energien, welche dann im Schiebebetrieb beim Abbremsen oder bei der Talfahrt wieder zurückgewonnen werden können.

Der Gesamtfahrwiderstand d.h. die einer wirkenden dynamischen Antriebskraft, aufgrund von an Rädern und Fahrbahn geleisteter Formänderungsarbeit und/oder Luftwiderstand und/oder Steigungswiderstand (Hangabtriebskraft) entgegenwirkende Fahrwiderstandskraft beträgt $F_W = F_{Roll} + F_{Luft} + F_{Steigung}$.

Die an den Antriebsrädern allein zur Überwindung der einzelnen Fahrwiderstände aufzuwendende Antriebsleistung (Fahrwiderstandsleistung) ist eine nicht zur dynamischen Beschleunigung beitragende Verlustleistung und beträgt $P_W = F_W * v / 3600$ mit $P_W$[kW], $F_W$[N] und v[km/h] (siehe Bosch, Kraftfahrtechnisches Taschenbuch, 28. Aufl. 2014, S. 774 ff.)

Da eine nach Überwindung des Steigungswiderstands gewonnene potentielle Energie mittels Generatorbetrieb eines Elektromotors bis auf thermische Verluste weitgehend wieder in elektrische Energie rückwandelbar(rekuperierbar)und in Energiespeichern speicherbar ist, kann der Steigungswiderstand nachstehend außer Ansatz bleiben.

Ein somit allein noch aus der statischen und dynamischen Reibung resultierender und von einer Motorleistung zu kompensierender Gesamtfahrwiderstand beträgt somit angenähert $F_W = F_{Roll} + F_{Luft} = \mu_r * F_N +$

$\frac{1}{2}C_w A * v^2$ * Luftdichte Rho, wobei $\mu_r$ der dimensionslose Rollreibungs-Koeffizient, $F_N = m*g$ (m = Masse, g = 9,81 m/s$^{-2}$) die als Normalkraft senkrecht zum Boden wirkende Gewichtskraft des Fahrzeuges, Cw der spezifische dimensionslose Luftwiderstandsbeiwert, A die Frontfläche des Fahrzeuges, Rho die Luftdichte und v die Geschwindigkeit des Fahrzeuges bedeuten.

Die Verlustleistung $P_W$ bzw. ein nicht für den dynamischen Vortrieb eingesetzter Treibstoff- oder Stromverbrauch, ist somit im Wesentlichen abhängig von der proportional mit dem Fahrzeuggewicht zunehmenden Rollreibungskraft und dem quadratisch mit der Fahrzeuggeschwindigkeit anwachsenden Luftwiderstand des Fahrzeuges.

Die Leistung welche dafür verbraucht wird, ist proportional zur Überwindung dieser Kräfte, der momentanen Geschwindigkeit und im Falle eines Verbrennungsmotors damit auch zum Kraftstoffverbrauch pro Zeiteinheit.

$$P_W\ (v) = F_W * v = \left(\mu_r * F_N + \frac{1}{2}C_w A * Rho * v^2\right) * \text{v} = \text{C}_1 \text{ x v} + \text{C}_2 \text{ x v}^3 \text{ [Watt]}$$

Mit $\mu_r$ = 0,01, $F_N$ = m x g = 575 kg x 9,81 m x s$^{-2}$, $c_W$ = 0,21, Winddruck-Stirnfläche A = 1,5225 m$^2$ und Luftdichte Rho (200m Höhe)= 1,202 kg/m$^3$ errechnen sich die Konstanten $C_1$, $C_2$ zu $C_1$ = 56,41[kg x m x s$^{-2}$] = 56,41 [N] und $C_2$ = 0,19 [kg/m].

Da an einem in einem Rollenprüfstand nebst Strömungskanal stehenden Kraftfahrzeug der Kraftstoffverbrauch des Fahrzeuges in der Ebene mit und ohne Windströmung für verschiedene Geschwindigkeiten gemessen werden kann und in Kenntnis, dass 1 Liter Diesel-Kraftstoff ca. 10 KWh Energie zur Verfügung stellt, können entsprechende Wertetabellen sowie dem geschwindigkeitsabhängigen Kraftstoffverbrauch C(v) entsprechende Kennlinien C(v) bzw. Verlustleistungskennlinien P(v) gemessen bzw. errechnet werden.

Auch ist bekannt, dass die Effizienz eines Verbrennungsmotors bei durchgeführten Lastwechseln (positive oder negative Beschleunigungen; Wechsel vom Zugbetrieb in den Schiebebetrieb)sowie auch bei Überdimensionierung stark sinkt, was sich wiederum negativ auf die Abgasemission auswirkt. Umso kontinuierlicher ein Verbrennungsmotor arbeitet, umso effizienter und emissionsärmer kann er nämlich dimensioniert und betrieben werden.

Es stellt sich damit die Aufgabe, die Vorteile des elektromotorischen als auch des verbrennungsmotorischen Antriebs in Hybridfahrzeugen, bei welchen der Elektromotor den Hauptantrieb leistet, derart zu verbinden, dass für die Betriebszustände Konstant-Geschwindigkeit und Beschleunigung die mittels Antriebsstrang auf die Fahrbahn zu übertragenden Drehmomente bestmöglich, d.h. möglichst energiesparend und insbesondere kraftstoffsparend erzeugt und auf die Antriebskomponenten aufgeteilt sowie bei den Betriebszuständen Abbremsung und Schiebebetrieb entstehende Drehmomente bestmöglich in elektrische Energie zurückgewandelt werden können.

Aufgabe der Erfindung ist es daher, ein Steuerungsverfahren für den Antriebsstrang eines Hybrid-Kraftfahrzeugs, insbesondere für dessen Verbrennungsmotor, anzugeben, damit dieses beim Betrieb mittels Elektromotor bis zu 150 km abgasfrei gefahren werden kann sowie beim Betrieb mittels Verbrennungsmotor unter Einhaltung der EU-Abgasnorm Euro-6 im Stadtverkehr einen Kraftstoff-Verbrauch von maximal 0,5l/100Km und im Überlandverkehr einen Kraftstoff-Verbrauch von maximal 1.5l/100Km aufweist. Weiter soll es von 0-100Km/h in 5s beschleunigt werden können und im Vergleich zu derzeit ausschließlich mit Verbrennungsmotoren betriebenen Kraftfahrzeugen gleichwohl noch einen konkurrenzfähigen Preis haben.

Diese Aufgaben werden erfindungsgemäß durch die kennzeichnenden Merkmale des Hauptanspruchs 1 gelöst.

Vorteilhafte Ausführungsformen der Erfindung sind in den jeweiligen Unteransprüchen näher gekennzeichnet.

Das erfindungsgemäße Verfahren ist dadurch gekennzeichnet, dass der hybridische Antriebsstrang mittels Betätigung des Beschleunigungspedals bis zum Erreichen einer Übergangsgeschwindigkeit $V_ü$ = 30 km/h +/- 10 km/h, vorzugsweise $V_ü$ = 30 km/h, ausschließlich über den Elektromotor gesteuert wird und dass danach der Verbrennungsmotor zugeschaltet wird, wobei während einer Betätigung des Bremspedals sowie während Bergabfahrten zuvor mechanisch gewonnene kinetische Energie oder potentielle Energie mittels Generatorbetrieb des Elektromotors wieder in elektrische Energie umgewandelt (rekuperiert) und im Elektrische-Energie-Speicher abgespeichert wird und dass der Verbrennungsmotor, ausschließlich abhängig von der gemessenen Momentan-Geschwindigkeit v des Kraftfahrzeugs und insbesondere unabhängig von der Stellung des Beschleunigungspedals oder des Bremspedals über eine ihn geschwindigkeitsabhängig steuernde Verlustleistungs-Steuerkennlinie P(v) oder Kraftstoffverbrauchs-Steuerkennlinie C(v) ausschließlich die Energie bereitstellt, welche erforderlich ist, um die durch geschwindigkeitsabhängige Fahrwiderstände (Rollwiderstand, Luftwiderstand)sowie elektrische Verbraucher bedingte Verlustleistung zu kompensieren.

Erfindungsgemäß kann hierdurch die über den Verbrennungsmotor bereitzustellende Energie auf unter 50 % der insgesamt genutzten Energie reduziert werden, ohne dass hierbei der Energiespeicher entladen werden müsste.

Da wegen der quadratischen Abhängigkeit des Luftwiderstands von der jeweiligen Geschwindigkeit der größte nicht rückgewinnbare Energieanteil erst bei höheren Geschwindigkeiten erzeugt wird und da bei kleinen Geschwindigkeiten nur eine sehr kleine nicht rückgewinnbare Leistung als Verlustleistung verbraucht wird, kann bis zu einer Übergangsgeschwindigkeit $v_ü$ von ca. 30 Km/h auf die Zuschaltung des Verbrennungsmotors verzichtet werden.

Erfindungsgemäß wird der erst nach Erreichen der Übergangsgeschwindigkeit zur Überwindung des Rollreibungswiderstands und zur Überwindung des Luftreibungswiderstands bzw. zwecks Kompensation der hierdurch bedingten Verlustleistungen zugeschaltete Verbrennungsmotor über eine geschwindigkeitsabhängige Verlustleistungs-Steuerkennlinie P(v) bzw. in Kenntnis dessen, dass 1 Liter Dieselkraftstoff einen Energieinhalt von ca. 10 kWh aufweist, über eine entsprechend berechenbare geschwindigkeitsabhängige Kraftstoffverbrauchs-Steuerkennlinie C(v)gesteuert.

Durch Betätigung des Beschleunigungspedals eingeleitete dynamisch positive Beschleunigungen erfolgen somit ausschließlich über den Elektromotor, dessen ihn speisender Energiespeicher sich hierbei entlädt. Durch Betätigung des Bremspedals eingeleitete dynamisch negative Beschleunigungen (Bremsvorgänge) oder Schiebebetriebe bei Bergabfahrten werden über den im Generatorbetrieb arbeitenden Elektromotor zur Aufladung des Energiespeichers verwendet.

Im Gegensatz zu herkömmlichen Hybridfahrzeugen hat der Fahrer bei Betätigung des Beschleunigungspedals, welches bei hauptsächlich verbrennungsmotorbetriebenen Kraftfahrzeugen herkömmlich als Gaspedal bezeichnet wird, erfindungsgemäß somit keinen Einfluss auf den Betriebszustand des Verbrennungsmotors bzw. die vom Verbrennungsmotor abgegebene Leistung.

Der abgasfrei arbeitende Elektromotor stellt vorliegend den Hauptantrieb dar und der nicht abgasfrei arbeitende Verbrennungsmotor wird ausschließlich zur Überwindung der durch Fahrwiderstandskräfte (Rollreibungswiderstand, Luftreibungswiderstand) auftretenden oder zur Überwindung bzw. Kompensation der bei Energieumwandlungen auftretenden thermischen Verlustleistungen dem Elektromotor zugeschaltet.

Vorzugsweise wird eine Leistungsverteilung von ca. 70% für den Elektromotor und ca. 30 % für den Verbrennungsmotor gewählt, wobei der Verbrennungsmotor keine Kraft- bzw. Drehmomentkomponente zur dynamischen Beschleunigung des Kraftfahrzeugs beiträgt, sondern ausschließlich zur Überwindung bzw. Kompensation solcher Verlustleistungen zugeschaltet wird, welche infolge linear oder quadratisch geschwindigkeitsabhängiger Fahrwiderstände (Rollreibungswiderstand, Luftreibungswiderstand)oder bei der Energie-Rekuperation als thermische Verluste oder als zusätzlicher Leistungsbedarf bei der Einschaltung elektrischer Verbraucher auftreten.

Wenn im Vergleich zum Elektromotor ein sehr kleiner Dieselmotor verwendet wird, welcher in etwa nur 30 % zur Gesamtantriebsleistung beiträgt, d.h. 70 % vom Elektromotor übernommen werden, lassen sich vorteilhaft auch die Kosten für eine Abgasreinigung deutlich verringern, insbesondere wenn der Dieselmotor vorzugsweise mit einem den Wirkungsgrad desselben steigernden Turbolader nebst Abgasrückführung versehen wird. Da der Elektromotor vorzugsweise ca. 70% der gesamten Leistung des Antriebes liefert, steht auch eine ausreichend große Fahrleistungsreserve für den reinen Elektrobetrieb zur Verfügung.

Besonders vorteilhaft ist, dass verschiedene Motor-Leistungsvarianten nur durch die einmalige Auslegung des Elektromotors verwirklicht werden können und nichts an der Steuerkurve (Verbrauchskurve) des Verbrennungsmotors geändert werden muss, weil dann keine weiteren Abgasprüfungen bei diesem Fahrzeugtyp vorgenommen werden müssen. Wenn ein speziell ausgelegter Elektromotor mit derselben Steuerkurve für den Verbrennungsmotor auch in anderen Fahrzeugvarianten verwendet werden kann, müssen auch keine weiteren Abgastests mehr durchführt werden. Damit ergibt sich ein erhebliches Potential zur Verringerung von Entwicklungskosten und Risiken. Auch kann die Entwicklungszeit bei der Entwicklung eines neuen Fahrzeugtyps signifikant verkürzt werden. Hierdurch ergibt sich ein sehr großer wirtschaftlicher Vorteil.

In vorteilhafter Weise können aufgrund der über eine herkömmlich allein zur Reduzierung des Kraftstoffverbrauchs in Stand-Phasen eingesetzte Start/Stopp-Automatik hinausgehenden, erfindungsgemäßen Zuschaltung des Verbrennungsmotors ab einer bestimmten Übergangsgeschwindigkeit die Abgaswerte bei der Prüfung auf Einhaltung der EURO-6-Norm um ca. 50%/km verringert werden. Durch die erfindungsgemäße Steuerung des Verbrennungsmotors lässt sich die vom Verbrennungskraftstoff zu liefernde Energie auf unter 50% der insgesamt aufzuwendenden Energie reduzieren, ohne dass für den Energiebeitrag des Verbrennungsmotors ansonsten erforderliche elektrische Energie aufgewendet bzw. der Akkumulator aufgeladen werden müsste.

Da ein wahlweise einsetzbares CVT-Getriebe über einen weiten Bereich eine konstante Eingangsdrehzahl bei variabler Ausgangsdrehzahl aufweist, kann insbesondere ein Dieselmotor ohne einen zusätzlichen Regler auf optimalem Wirkungsgrad betrieben werden. Es ist somit vorteilhaft, einen unterhalb einer optimalen Drehzahl laufenden Dieselmotor auch automatisch auszuschalten.

Die zur Überwindung des Rollreibungswiderstands und Luftreibungswiderstands erforderliche Leistung P (v) des zugeschalteten Verbrennungsmotors bzw. sein Kraftstoffverbrauch C(v) werden besonders vorteilhaft über eine geschwindigkeitsabhängige erste Leistungs-Steuerkennlinie der Funktion $P_v(v) = C_1 \times v + C_2 \times v^3$ mit $C_1 = 56,41[N]$ und $C_2 = 0,19 [kg/m]$ gesteuert.

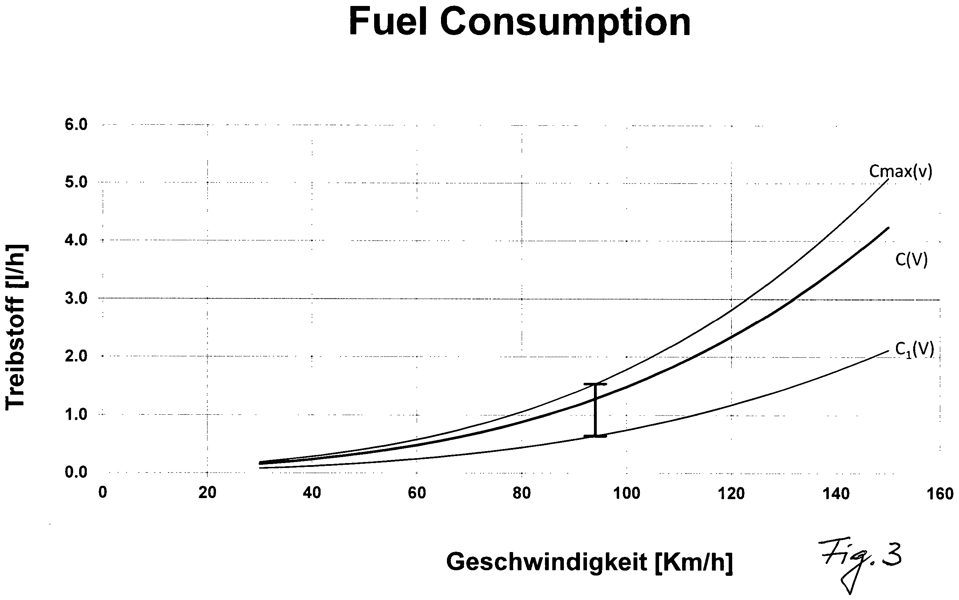

Nachstehend sind unter Einbeziehung der Angaben von Kraftfahrzeug- und Reifen-Herstellern sowie typischer $c_W$-Werte ermittelte Kraftstoffverbrauchs-Werte C(v)in l/h als Funktion der Geschwindigkeit in einer Wertetabelle angegeben und in Fig.3 als Graph wiedergegeben (mit m = 575 kg):

| V[Km/h] | Fuel [l/h] |
|---------|------------|
| 0 | 0,00E+00 |

(fortgesetzt)

| V[Km/h] | Fuel [l/h] |
|---|---|
| 5 | 2,09E-02 |
| 10 | 4,26E-02 |
| 15 | 6,60E-02 |
| 20 | 9,18E-02 |
| 25 | 1,21E-01 |
| 30 | 1,54E-01 |
| 35 | 1,92E-01 |
| 40 | 2,36E-01 |
| 45 | 2,86E-01 |
| 50 | 3,44E-01 |
| 55 | 4,10E-01 |
| 60 | 4,85E-01 |
| 65 | 5,69E-01 |
| 70 | 6,65E-01 |
| 75 | 7,71E-01 |
| 80 | 8,90E-01 |
| 85 | 1,02E+00 |
| 90 | 1,17E+00 |
| 95 | 1,33E+00 |
| 100 | 1,51E+00 |
| 105 | 1,70E+00 |
| 110 | 1,91E+00 |
| 115 | 2,14E+00 |
| 120 | 2,38E+00 |
| 125 | 2,65E+00 |
| 130 | 2,93E+00 |
| 135 | 3,24E+00 |
| 140 | 3,57E+00 |
| 145 | 3,92E+00 |
| 150 | 4,30E+00 |

Da erfindungsgemäß ausschließlich die durch Fahrwiderstände verlorene Leistung vom Verbrennungsmotor übernommen werden soll und da ein Teil der zu Beschleunigungen und Bergauffahrten aufgewandten Energien bei Bremsvorgängen und Bergabfahrten wiedergewonnen werden kann, lässt sich eine momentan gebrauchte Leistung durch den momentan benötigten Kraftstoffverbrauch darstellen, womit sich das Problem der optimalen Drehmomentverteilung auf Elektromotor und Verbrennungsmotor durch eine Funktion darstellen lässt, welche ausschließlich geschwindigkeitsabhängig einen Kraftstoffverbrauchswert wiedergibt, der dann dem Verbrennungsmotor zur Verfügung steht. Ein zentrales Motormanagement-Steuergerät verarbeitet also die durch Geschwindigkeitssensoren ausgelesene Momentan-Geschwindigkeit als Eingangswert und gibt einen Kraftstoffverbrauchswert gemäß C(v)als Ausgangswert aus.

Die Stellung des Gaspedals spielt somit für die Regelung des erfindungsgemäß betriebenen Verbrennungsmotors keine Rolle mehr. Gaspedal-und Bremspedalstellungen werden über das zentrale Motormanagement-Steuergerät an das Elektromotor-Steuergerät weitergeleitet, wobei die Betriebssicherheit betreffende Funktionen wie das Anspringen eines ABS oder systemkritische Entlade - oder Überladungszustände des Energiespeichers berücksichtigt werden können.

Das erfindungsgemäße Verfahren ist auch deshalb vorteilhaft, weil die Rekuperation ohne komplizierte Modelle und Fahrtenspeicher erfolgen kann. Zum Auftreten von Nichtlinearitäten neigende komplizierte Kennfelder, Fall-Unterscheidungen und Verzweigungen in der Regelung würden zudem die Gefahr beinhalten, dass eine Regelung aufschwingen kann. Erfindungsgemäß sind alle zur Drehmomentverteilung erforderlichen Regelungskomponenten voneinander getrennt und linear. Hierdurch ist das erfindungsgemäß arbeitende Gesamtsystem auch sehr stabil.

Besonders vorteilhaft ist es für einen Kraftfahrzeugführer, mittels einer Energiewahlvorrichtung, vorzugsweise einer PotentiometerSchaltung, wählen zu können, ob und wie viel elektromotorisch oder verbrennungsmotorisch erzeugte Energie er anlässlich einer Fahrt überhaupt einsetzen will, bzw. bestimmen zu können, ob und in welchem Maß der Akkumulator oder ein anderer Speicher elektrischer Energie entladen bzw. geladen werden soll. Dies erfolgt mittels wahlweiser Steuerung durch Kraftstoffverbrauchs-Steuerkennlinien $C_n(v)$ (n = 0,1,2,3,... max) im Bereich zwischen einer untersten Steuerkennlinie $C_0(v)= C(v)$- 100 % x $C(v)$ über beispielsweise eine erste Steuerkennlinie $C_1(v)= C(v)$- 50 % x $C(v)$unterhalb der Hauptsteuerkennlinie $C(v)$ bis zu einer obersten Steuerkennlinie

$$C_{max}(v) = C(v) + 20 \% \times C(v).$$

Durch die Verschiebung der Verlustleistungswerte bzw. der hierfür eingesetzten Kraftstoffverbrauchswerte nach unten ist es möglich, grundsätzlich auch den Elektromotor zur Überwindung der Reibungs-und Umwandlungsverluste einzusetzen und insoweit zu entladen oder mit diesem allein nur elektrisch zu fahren, und den Energiespeicher hierbei zu entladen oder eine Überladung zu vermeiden und hierbei einen Verbrauch von Verbrennungskraftstoff entweder ganz zu vermeiden oder zumindest abzusenken.

Durch die Verschiebung nach oben ist es möglich, den Einsatz des Elektromotors zurückzufahren und insoweit eine Entladung des Energiespeichers zu verhindern, wobei der Verbrauch von Verbrennungskraftstoff hierbei naturgemäß erhöht wird.

Mit einem vorteilhaft zusätzlich betriebenen Turbolader ist es zudem möglich, mittels Abgasrückführung den Wirkungsgrad eines Dieselmotors weiter zu steigern und auftretende Stickoxidwerte soweit zu reduzieren, dass sie nicht weiter nachbehandelt werden müssen. Damit lässt sich eines der größten Probleme beim Dieselmotor abschwächen bzw. lösen.

Da für kleine Diesel-Motoren bislang keine kostengünstigen Katalysatoren für Stickoxide erhältlich sind, ist das erfindungsgemäß hybridisch arbeitende Antriebssteuerverfahren besonders vorteilhaft geeignet, auch bei Diesel-Kraftfahrzeugen, wie z.B. dem Smart® der Daimler AG die Euro-6-Abgasnorm zu erfüllen.

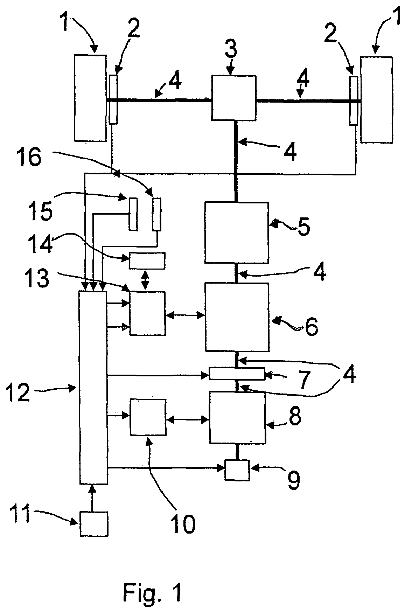

Infolge Anwendung des erfindungsgemäßen Verfahrens in einem, mit einer entsprechenden Vorrichtung gemäß Beschreibung zu Fig.1 ausgerüsteten Kraftfahrzeug ist es möglich, bis zu 150 km weit vollkommen abgasfrei zu fahren und bei einem Verbrauch von maximal 1.5l/100km ohne jegliche Reichweiten-Beschränkung fahren zu können. Der erfindungsgemäße Antrieb bzw. das erfindungsgemäße Steuerverfahren ermöglichen es, ein Fahrzeug bis zur Masse 500 kg, insbesondere ein dreirädriges Kraftfahrzeug (Trike) in 5s von null auf 100 km/h zu beschleunigen und dieses hierdurch eine maximale Geschwindigkeit von 150 km/h erreichen zu lassen. Durch das besondere Merkmal einer Start- und Stopp-Automatik, welche den Verbrennungsmotor, vorzugsweise einen Dieselmotor erst ab etwa 30Km/h zuschaltet und diesen bei nicht gleichlastigen Betriebszuständen auch wieder abschalten kann, wird ein mit dem erfindungsgemäßen Verfahren arbeitendes Kraftfahrzeug auch ohne größeren Abgasreinigungsaufwand die Grenzwerte der europäischen Abgasnorm Euro-6 weit unterschreiten und damit wohl auch zukünftigen, noch strengeren Abgas-Grenzwerte genügen können. Eine niedrigere Fahrzeugmasse als ca. 500 kg erlaubt einen entsprechend noch kleiner dimensionierten Antrieb und einen Akkumulator entsprechend reduzierter Kapazität, wodurch die Kosten des Kraftfahrzeuges vorteilhaft auf dem derzeitigen Niveau eines Kleinwagens gehalten werden können.

In vorteilhafter Weise findet das erfindungsgemäße Verfahren bei einem seriell oder parallel geschalteten Full-Hybrid-Kraftfahrzeug Anwendung, wobei die Leistung des Elektromotors die Leistung des Verbrennungsmotors überschreitet und wobei die Akkumulator-Kapazität so ausreichend dimensioniert ist, dass ausschließlich mit dem Elektromotor die Beschleunigungsaufgaben übernommen werden können und beim Bremsen frei werdende Bremsenergie in elektrische Energie zurückverwandelt, d.h. zurückgewonnen werden kann.

Besonders vorteilhaft ist es, ein Trike, d.h. ein vorzugsweise als geschlossenes Auto-Trike oder als offenes Motorrad-Trike gestaltetes, motorisiertes dreirädriges Leichtfahrzeug mit einem Vorderrad und zwei Hinterrädern, insbesondere auch ein Twike als mit dem erfindungsgemäßen Verfahren arbeitendes und/oder mit der erfindungsgemäßen Vorrichtung ausgestattetes Hybridfahrzeug auszubilden. Hierbei werden jedenfalls in Deutschland verkehrszulassungsrechtlich auch dann vierrädrige Fahrzeuge als Dreiräder bezeichnet, wenn ein Räderpaar als Zwillingsrad ausgeführt oder der Abstand zwischen der Mitte der beiden Reifen-Aufstandsflächen nicht mehr als 465 Millimeter beträgt.

In den Zeichnungen wird das erfindungsgemäße Verfahren sowie die zur Durchführung des Verfahrens in einem Hybridfahrzeug geeignete Vorrichtung anhand eines Ausführungsbeispiels näher beschrieben und erläutert.

Fig.1 zeigt ein Ausführungsbeispiel der erfindungsgemäßen Vorrichtung zur Durchführung des erfindungsgemäßen Verfahrens in einer Prinzip-Darstellung.

Fig.2 zeigt eine geschwindigkeitsabhängige erfindungsgemäße Verlustleistungs-Steuerkennlinie P(v) für den Verbrennungsmotor.

Fig.3 zeigt eine mit der Verlustleistungs-Steuerkennlinie P(v)nach Figur 2 korrespondierende geschwindigkeitsabhängige Treibstoff-Verbrauchskurve C(v) sowie das Kennlinien-Feld von Steuerkennlinien $C_n$(v) innerhalb eines vorzugsweise zwischen $C_1$(v) und $C_{max}$(v) wählbaren Einstellbereichs.

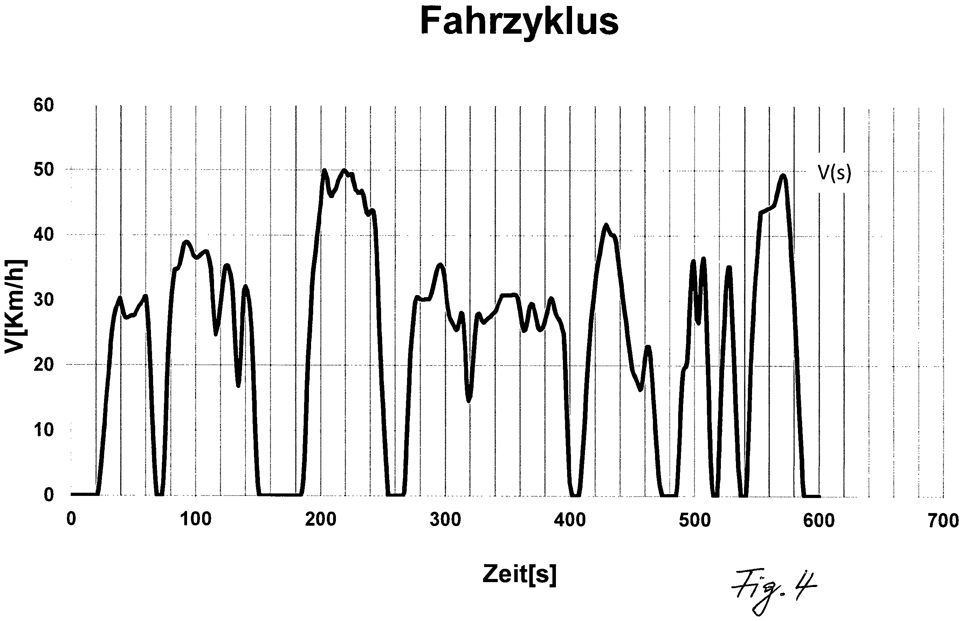

Fig.4 zeigt einen gesetzlich genormten geschwindigkeits-zeitabhängigen Fahrzyklus v(s), beispielhaft für Motorräder und Trikes Fig.1 zeigt in einer Prinzip-Darstellung einen seriell geschalteten Hybridantrieb für ein Kraftfahrzeug mit einem Elektromotor 6 und einem Verbrennungsmotor 8 sowie mit zwei Antriebsrädern 1, welche mittels Antriebswellen 4 über ein zwischengeschaltetes Ausgleichs-Differentialgetriebe 3 mechanisch mit einem Getriebe 5 verbunden sind, wobei am Antriebsstrang anliegende Drehmomente über die Antriebsräder 1 auf die Fahrbahn übertragen werden bzw. im Schiebebetrieb an den Antriebsrädern 1 erzeugte Drehmomente über das Getriebe 5 auf den im Generatorbetrieb laufenden Elektromotor 6 zurückübertragen werden. Das Getriebe 5 ist vorzugsweise ein keinen Rückwärtsgang aufweisendes stufenlos arbeitendes CVT(Continuously Variable Transmission)- Getriebe. Das Getriebe 5 ist über eine der Antriebswellen 4 starr mit dem den Hauptantrieb darstellenden Elektromotor 6 gekoppelt, welcher seinerseits über eine Kupplung 7, welche eine elektrische oder auch eine Fliehkraftkupplung sein kann, mit einem über einen Anlasser 9 startbaren Verbrennungsmotor 8 verbunden ist. Der Verbrennungsmotor 8 ist über ein Verbrennungsmotor-Steuergerät 10 nicht nur mit dem zentralen Motormanagement-Steuergerät 12, sondern auch mit zusätzlichen (nicht dargestellten)Baugruppen, wie z.B. Abgasrückführungs-EGR-Ventilen, Lambdasonden, Turboladern, Diesel-Partikel-Filtern(DPF) und Katalysatoren verbunden und bildet eine selbständig funktionierende Einheit.

Dem Elektromotor 6 ist eine Elektromotor-Steuereinheit 13 und dem Verbrennungsmotor 8 ist die als CPU ausgebildete Verbrennungsmotor-Steuereinheit 10 elektrisch vorgeschaltet. Die zentral übergeordnete Motormanagement-Hauptsteuereinheit 12 ist vorgesehen, nicht nur um von einer ihr zugeordneten Energiewahl-Vorrichtung 11 mit einem dem Wunsch des Kraftfahrzeugführers hinsichtlich Qualität und Quantität der Energiewahl entsprechenden Signal beaufschlagt zu werden, sondern auch, um von zwei im Bereich der Antriebsräder 1 angeordneten Geschwindigkeitssensoren 2 sowie am Bremspedal 15 sowie am Beschleunigungspedal 16 jeweils angeordneten Stellungssensoren der jeweiligen Momentan-Geschwindigkeit v des Kraftfahrzeugs und der jeweiligen Stellung des Bremspedals 15 und des Beschleunigungspedals 16 entsprechende elektrische Signale zu erhalten. Zudem werden in die Motormanagement-Hauptsteuereinheit 12 Werte eines Kraftstoffverbrauchssensors eingelesen, welcher geschwindigkeitsabhängig angibt, welche Kraftstoffverbrauchsmenge dem Verbrennungsmotor 8 zusteht. Diese Signale werden dem erfindungsgemäßen Steuerungsverfahren entsprechend verarbeitet, d.h. es werden sowohl die für die Drehmomentabgabe des Elektromotors 6 als auch die für die Drehmomentaufnahme des im Generatorbetrieb laufenden Elektromotors 6 erforderlichen Spannungen und Ströme erzeugt, als auch der Elektromotor 6 entsprechend elektrisch beaufschlagt. Zusätzlich wird über die den Verbrennungsmotor 8 steuernde Verbrennungsmotor-Steuereinheit 10 der Verbrennungsmotor 8 ab einer wählbaren Übergangs-Geschwindigkeit, vorzugsweise 30 km/h, zugeschaltet, wobei nach Messung der erfindungsgemäß benötigten Kraftstoffverbrauchsmenge mittels Kraftstoffmengensensors diese Füllmenge dem Verbrennungsmotor 8 bzw. im Fall eines Dieselmotors mittels eines Aktuators für die Diesel-Einspritzung zugeführt wird. Wahlweise kann ein über die Motormanagement- Hauptsteuereinheit 12 mittels elektrischer Kupplung 7 dem Antriebsstrang des Elektromotors 6 einmal zugeschalteter Verbrennungsmotor 8 bedarfsweise auch wieder abgeschaltet werden. Bis zu einer Geschwindigkeit von ca. 100 km/h sorgt das automatische Getriebe 5 dafür, dass der Verbrennungsmotor 8 stets im Bereich der effizientesten Drehzahl läuft.

Der Elektromotor 6 muss mindestens die Leistung erbringen bzw. im Generatorbetrieb aufnehmen können, welche erforderlich ist, um eine gewünschte Beschleunigung zu erzeugen und eine gewünschte Verzögerungsleistung bzw. die hierbei frei werdende mechanische Energie wieder in elektrische Energie zurückgewinnen zu können.

Letztlich ist es nicht entscheidend, ein bestimmtes Leistungsverhältnis zwischen Elektromotor und Verbrennungsmotor vorzugeben, sondern nur die Leistung des Elektromotors so groß genug auszulegen, dass er mindestens das notwendige Drehmoment zur Verfügung stellt, um die gesetzlichen Mindest-Steigungen überwinden zu können oder die vom Entwerfer geforderten Beschleunigungen erreichen zu können. Der Verbrennungsmotor sollte mindestens genug Leistung haben, um die während der Fahrt auftretenden Verlustleistungen ausgleichen zu können.

Im Hinblick auf die insgesamt für den Antrieb des Kraftfahrzeugs zur Verfügung stehende Leistung P ist die Verbrennungsmotor-Leistung $P_{VM}$ klein gegenüber der Elektromotor-Leistung $P_{EM}$ ausgelegt, vorzugsweise mit $P_{VM}$ = 30 % und $P_{EM}$ = 70 %.

Die Kapazität eines über das Elektromotor-Steuergerät 13 mit dem Elektromotor 6 elektrisch verbundenen Elektrische-Energie-Speichers 14 ist so auszulegen bzw. zu wählen, dass es möglich ist, bis zu einer Geschwindigkeit von 30 km/h rein elektrisch, d.h. ausschließlich im elektromotorischen Betrieb zu fahren sowie möglichst alle rekuperierbare Energie aufnehmen und wieder abgeben zu können. Als Elektrische-Energie-Speicher ist herkömmlich ein Akkumulator gewählt. Es kann vorliegend aber auch ein Superkondensator gewählt werden. Letztere weisen zwar nur etwa 10 % der Energiedichte eines Akkumulators, andererseits aber das 10- bis 100-fache der Leistungsdichte eines Akkumulators auf. Dies macht Superkondensatoren als Ersatz oder Ergänzung herkömmlicher Akkumulatoren besonders geeignet, wenn wie vorliegend zum Zwecke der insbesondere Bremsenergierückgewinnung(Rekuperation)schnell wechselnde Be-und Entladungszyklen erforderlich sind.

Die Leistung des Verbrennungsmotors 8 ist mindestens so ausreichend groß zu dimensionieren, dass im verbrennungsmotorischen Zusatzbetrieb die angestrebte Maximalgeschwindigkeit des Fahrzeugs, vorliegend 150 km/h, erreicht und auch gehalten werden kann.

An den Antriebsrädern 1 sind als Geschwindigkeitssensoren 2 vorzugsweise die - zugleich in einem ABS (Automatisches Bremssystem)wirkenden - Sensoren angeordnet, welche wiederum mit dem übergeordneten Motormanagement-Steuergerät 12 elektrisch verbunden sind.

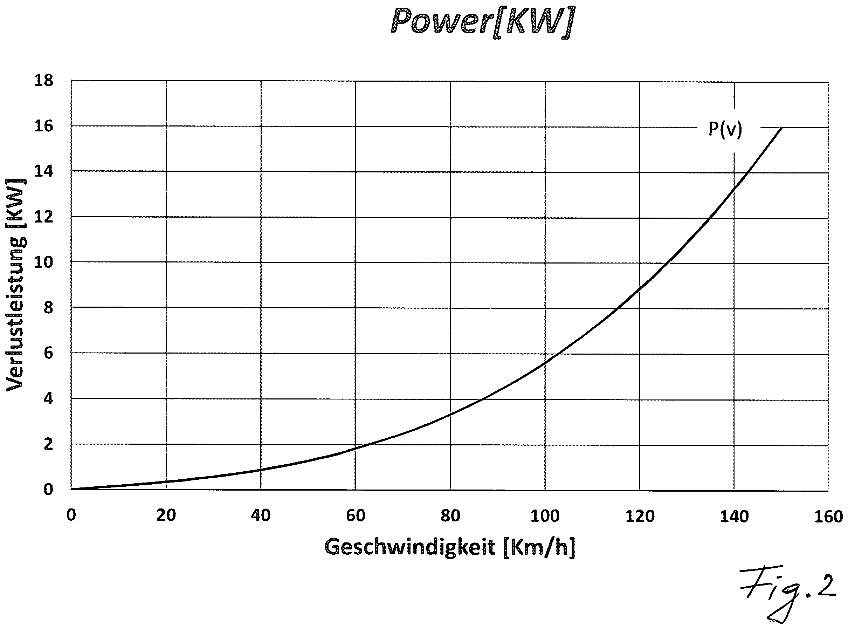

Fig. 2 zeigt einen Graphen P(v)= $C_1$ x v + $C_2$ x $v^3$ der geschwindigkeitsabhängigen erfindungsgemäßen Steuerkennlinie P(v) für den Verbrennungsmotor mit $C_1$ =56,41[kg*m*s$^{-2}$]= 56,41 [N] und $C_2$ = 0,19 [kg/m].

Auf der Abszisse ist die jeweilige Momentan-Geschwindigkeit v und auf der Ordinate ist die hierbei fahrwiderstandsbedingt auftretende Verlustleistung P(v)[kW] aufgetragen. Da der Verbrennungsmotor erfindungsgemäß erst ab einer Übergangsgeschwindigkeit $v_ü$ = 30 km/h zugeschaltet wird, sind auch nur die ab hier aufsteigenden Funktionswerte für die Steuerung des Verbrennungsmotors 8 maßgebend.

Das Verbrennungsmotor-Steuergerät 10 erhält ein Startsignal zum Starten des Verbrennungsmotors 8 und eine Anforderung der Verbrauchsleistungen vom Motormanagement-Steuergerät 12. Das Elektromotor-Steuergerät 13 erhält die notwendigen Steuersignale vom Motormanagement-Steuergerät 12 und wird hierdurch veranlasst entweder im elektromotorischen Betriebszustand mittels des an den Akkumulator 14 angeschlossenen Elektromotors 6 Drehmomente zu erzeugen oder im Generatorbetrieb des Elektromotors 6 erzeugte Drehmomente zu nutzen, um den Akkumulator (14) wieder aufzuladen, das heißt Energie zu rekuperieren. Damit kann die Geschwindigkeit des Kraftfahrzeuges entweder erhöht, gehalten oder verringert werden. Mit einem über eine Energiewahlvorrichtung 11 an das Motormanagement-Steuergerät 12 weitergeleiteten Steuersignal kann der Kraftfahrzeugführer zu jeder Zeit entscheiden, ob und welcher Kraftstoff-Verbrauch, gemessen in l/h oder cm$^3$/h, wahlweise eingesetzt werden soll.

Fig.3 zeigt das Kennlinien-Feld von Kraftstoffverbrauch-Steuerkennlinien C(v) innerhalb eines vorzugsweise zwischen $C_1$(v) und $C_{max}$(v)wählbaren Einstellbereichs.

Der Verbrennungsmotor 8 wird vorzugsweise durch eine dieser Verbrauchskurven gesteuert. Damit ist der hierdurch geschwindigkeitsabhängig angeforderte bzw. zugelassene Kraftstoffverbrauch vorgegeben, wodurch die geltenden Abgasnormen erfüllt werden können.

Die Kraftstoffverbrauch-Steuerkennlinien C(v) entsprechen einer durch einen Einstellbereichs-Balken verdeutlichten vorzugsweisen Verschiebung der Funktionswerte der in Fig.2 gezeichneten HauptSteuerkennlinie P(v) in Plus-Ordinaten-Richtung, was einem Kraftstoff-Mehrverbrauch entspricht oder in Minus-Ordinaten-Richtung, was einem Kraftstoff-Minderverbrauch entspricht. Dies geschieht vorzugsweise in den Grenzen von + 20% in Plus-Ordinaten-Richtung nach oben sowie -50 % in Minus-Ordinaten-Richtung nach unten. In Null-Stellung der als Einstellknopf ausgebildeten Energiewahlvorrichtung 11 kann auch ein rein elektromotorischer Fahrbetrieb ohne Kraftstoffverbrauch angefordert werden, was einer - 100 %-Verschiebung in Minus-Ordinaten-Richtung nach unten entspricht.

Fig.4 zeigt beispielhaft einen gesetzlich genormten Fahrzyklus zur Messung von Kraftstoffverbrauch und Abgasemission für leichte Kraftfahrzeuge, wie Motorräder und Trikes für den Stadtverkehr nach dem weltweit harmonisierten Testzyklus "Worldwide harmonized Motorcycle Test Cycle" (WMTC) Phase 2 Teil 1. Zusammen mit den aus der Kraftstoffverbrauchskurve nach Fig.3 zu entnehmenden Daten lässt sich anhand numerischer Integration sowohl der Verbrauch für den einschlägigen Fahrzyklus als auch die zurückgelegte Fahrstrecke ermitteln. Für ein Kraftfahrzeug mit der Masse 550 kg ergibt der Quotient Verbrauch/zurückgelegte Fahrstrecke z.B. einen Kraftstoffverbrauch von 0,55 Liter/ 100 km.

Durch das erfindungsgemäße Steuer-Verfahren kann der über den Elektromotor 6 nebst Elektromotor-Steuergerät 13 vermittelte elektromotorische Fahrantrieb sowie der über den Verbrennungsmotor 8 nebst Verbrennungsmotor-Steuergerät 10 vermittelte verbrennungsmotorische Fahrantrieb auf demselben Antriebsstrang mit den Antriebswellen 4 auch vollkommen unabhängig voneinander durchgeführt werden, solange das zentral übergeordnet agierende Motormanagement-Steuergerät 12 die beiden motorischen Komponenten des Hybridantriebs nicht programmtechnisch verbindet und das Verbrennungsmotor-Steuergerät 10 und das Elektromotorsteuergerät 13 nicht weitere drehmomentabhängige oder andere nicht trennbare Aufgaben auf den Antriebswellen 4 übernehmen sowie beide Motoren 6,8 zusammen mit dem Akkumulator 14 ausreichend groß genug dimensioniert sind, um die im Fahrbetrieb gewünschten und gesetzlich erforderlichen Fahrleistungen zur Verfügung stellen zu können (s. Delegierte VO (EU) Nr.134/2014 vom 16.12.2013 in Verbindung mit VO(EU) Nr.168/2013 vom 15.01.2013 in Bezug auf Anforderungen an die Umweltverträglichkeit und Leistung der Antriebseinheit leichter Kraftfahrzeuge, wie z.B. VTS-741.41 Kapitel 3 Art.54 Abs.3 - Steigungsangabe/minimales Drehmoment).

Bezugszeichenliste:

1   Antriebsräder
2   Geschwindigkeitssensoren
3   Differential-Ausgleichsgetriebe
4   Antriebswellen
5   Getriebe
6   Elektromotor
7   Kupplung
8   Verbrennungsmotor
9   Anlasser
10  Verbrennungsmotor-Steuergerät
11  Energiewahlvorrichtung
12  Motormanagement-Steuergerät
13  Elektromotor-Steuergerät
14  Elektrischer-Energie-Speicher (Akkumulator)
15  Bremspedal
16  Beschleunigungspedal (Gaspedal)

**Patentansprüche**

1. Verfahren zur Steuerung des Antriebsstranges eines Hybrid-Kraftfahrzeugs mit mindestens einem Elektromotor (6) und mindestens einem Verbrennungsmotor (8), mindestens einem Geschwindigkeitssensor (2) und mindestens einem Elektrische-Energie-Speicher(14) sowie einem Bremspedal (15) und einem Beschleunigungspedal (16), **dadurch gekennzeichnet, dass** der hybridische Antriebsstrang mittels Betätigung des Beschleunigungspedals (16) bis zum Erreichen einer Übergangsgeschwindigkeit $V_{Ü}$ = 30 km/h +/- 10 km/h, vorzugsweise $V_{Ü}$ = 30 km/h, ausschließlich über den Elektromotor (6)gesteuert wird und dass danach der Verbrennungsmotor (8) zugeschaltet wird, wobei während einer Betätigung des Bremspedals (15) sowie während Bergabfahrten zuvor mechanisch gewonnene kinetische Energie oder potentielle Energie mittels Generatorbetrieb des Elektromotors (6) wieder in elektrische Energie umgewandelt (rekuperiert) und im Elektrische-Energie-Speicher (14) abgespeichert wird und dass der Verbrennungsmotor (8), ausschließlich abhängig von der gemessenen Momentan-Geschwindigkeit v des Kraftfahrzeugs und insbesondere unabhängig von der Stellung des Beschleunigungspedals (16) oder des Bremspedals (15) über eine ihn geschwindigkeitsabhängig steuernde Verlustleistungs-Steuerkennlinie P(v) oder Kraftstoffverbrauchs-Steuerkennlinie C(v) ausschließlich die Energie bereitstellt, welche erforderlich ist, um die durch geschwindigkeitsabhängige Fahrwiderstände (Rollwiderstand, Luftwiderstand) sowie elektrische Verbraucher bedingte Verlustleistung zu kompensieren.

2. Verfahren zur Steuerung des Antriebsstranges eines Hybrid-Kraftfahrzeugs nach Anspruch 1, **dadurch gekennzeichnet, dass** die Elektromotor-Leistung $P_{EM}$ = 70 % und die Verbrennungsmotor-Leistung $P_{VM}$ = 30 % der insgesamt zur Verfügung stehen sollenden Antriebsleistung beträgt.

3. Verfahren zur Steuerung des Antriebsstranges eines Hybrid-Kraftfahrzeugs nach Anspruch 1 oder 2, **dadurch gekennzeichnet, dass** die zur kompensierenden Überwindung des Rollreibungswiderstands und Luftreibungswiderstands erforderliche Leistung P(v) des zugeschalteten Verbrennungsmotors (8) bzw. sein Kraftstoffverbrauch C(v) über eine geschwindigkeitsabhängige erste Verlustleistungs-Steuerkennlinie P(v) der Funktion P(v)[Watt]= $C_1$ x v + $C_2$ x $v^3$ [Watt] mit $C_1$ = 56,41[N] und $C_2$ = 0,19 [kg/m] gesteuert wird.

4. Verfahren zur Steuerung des Antriebsstranges eines Hybrid-Kraftfahrzeugs nach einem der vorhergehenden Ansprüche, **dadurch gekennzeichnet, dass** proportional zur ersten Verlustleistungs-Steuerkennlinie P(v) weitere Verlustleistungs-Steuerkennlinien $P_n$ (v) oder Kraftstoffverbrauch-Steuerkennlinien $C_n$(v) mit n = 1,2,3,... zur unmittelbaren Steuerung, ob und in welchem Maße der Verbrennungsmotor (8) zugeschaltet werden soll sowie zur hiervon abhängigen mittelbaren Steuerung eines erwünschten Ladungsvorgangs oder Entladungsvorgangs des Elektrische-Energiespeichers(14)mittels einer Wahlvorrichtung (11), vorzugsweise eines Potentiometers, einstellbar sind, vorzugsweise über einen Bereich im wesentlichen von $P_1$(v) = P(v) - 50 % x P(v) unterhalb bis $P_{max}$(v) = P(v) + 20 % x P(v)oberhalb derselben bzw. $C_1$(v)= C(v)- 50 % x C(v) unterhalb bis $C_{max}$(v)= C(v) + 20 % x C(v) oberhalb derselben.

**5.** Verfahren zur Steuerung des Antriebsstranges eines Hybrid-Kraftfahrzeugs nach einem der vorhergehenden Ansprüche, **dadurch gekennzeichnet, dass** der Verbrennungsmotor (8) ein mit Dieselkraftstoff betriebener, vorzugsweise ein mit einem Turbolader nebst Abgas-Rückführung versehener Diesel-Motor ist.

**Claims**

**1.** Method of controlling the drive train of a hybrid motor vehicle with at least one electric motor (6) and at least one combustion engine (8), at least one speed sensor (2) and at least one electrical energy storage system (14) as well as a brake pedal (15) and an accelerator pedal (16), **characterised by the fact that** the hybrid drive train is controlled exclusively by the electric motor (6), by means of operation of the accelerator pedal (16), until a transition speed of $V_\tau$ = 30 km/h +/- 10 km/h, preferably $V_U$ = 30 km/h, is reached and the combustion engine (8) is then activated, whereby kinetic energy previously generated mechanically in operation of the brake pedal (15) and when travelling downhill or potential energy from generator operation of the electric motor (6) is converted back into electrical energy (recuperated) and stored in the electrical energy storage system (14), and that the combustion engine (8) provides only the energy required to compensate for the power loss owing to speed-dependent driving resistances (roll resistance, air resistance) as well as electrical consumers, depending exclusively on the measured present speed v of the vehicle and specifically independently of the position of the accelerator pedal (16) or the brake pedal (15) over a power loss control characteristic curve P(v) or a fuel consumption characteristic curve C(v) by which it is controlled depending on speed.

**2.** Method of controlling the drive train of a hybrid motor vehicle according to claim 1, **characterised by the fact that** the electric motor power $P_{EM}$ = 70 % and the combustion engine power $P_{VM}$ = 30 % of the total drive power that should be available.

**3.** Method of controlling the drive train of a hybrid motor vehicle according to claim 1 or 2, **characterised by the fact that** the power P(v) from the activated combustion engine (8), which is required to overcome the rolling friction resistance and air friction resistance by compensation or the fuel consumption of the same C(v), is controlled via a speed-dependent power loss control characteristic curve P(v) of the function P(v) [watts] = $C_1$ x v + $C_2$ x $v^3$ [watts], where $C_1$ = 56.41[N] and $C_2$ = 0.19[kg/m].

**4.** Method of controlling the drive train of a hybrid motor vehicle according to one of the preceding claims, **characterised by the fact that** further power loss control characteristic curves $P_n(v)$ or fuel consumption characteristic curves $C_n(v)$ where n = 1, 2, 3... in proportion to the first power loss control characteristic curve P(v) can be configured for direct control of whether and to what extent the combustion engine (8) should be activated and for indirect control of a desired electrical energy storage system (14) charging process or discharging process that is dependent on this, by means of a selection device (11), preferably a potentiometer and preferably across a range essentially from $P_1(v)$ = P(v) - 50 % x P(v) below to $P_{max}(v)$ = P(v) + 20 % x P(v) above the same or from $C_1(v)$ = C(v) - 50 % x C(v) below to $C_{max}(v)$ = C(v) + 20 % x C(v) above the same.

**5.** Method of controlling the drive train of a hybrid motor vehicle according to one of the preceding claims, **characterised by the fact that** the combustion engine (8) is a diesel engine powered by diesel fuel, preferably with a turbocharger as well as exhaust gas recirculation.

**Revendications**

**1.** Processus de commande du groupe motopropulseur d'un véhicule hybride avec au moins un moteur électrique (6) et au moins un moteur à combustion (8), au moins un capteur de vitesse (2) et au moins un accumulateur d'énergie électrique(14) ainsi qu'une pédale de frein (15) et une pédale d'accélération (16) **caractérisé en ce que** le groupe motopropulseur hybride est commandé exclusivement par le moteur électrique (6) en actionnant la pédale d'accélérateur (16) jusqu'à atteindre une vitesse de transition de Vü = 30 km/h +/- 10 km/h, de préférence Vü = 30 km/h et que le moteur à combustion (8) est enclenché ensuite, alors que l'énergie cinétique ou potentielle gagnée auparavant de manière mécanique en actionnant la pédale de frein (15) ainsi que pendant les trajets en descente est à nouveau transformée (récupérée) en énergie électrique au moyen du mode générateur du moteur électrique et stockée dans l'accumulateur d'énergie électrique (14) et que le moteur à combustion (8), mette à disposition, exclusivement en fonction de la vitesse actuelle mesurée v du véhicule et en particulier indépendamment de la position de la pédale d'accélération (16) ou de frein (15) et au moyen d'une ligne caractéristique de commande de dissipation d'énergie sous contrôle de vitesse P(v) ou de consommation de carburant C(v), uniquement l'énergie nécessaire pour compenser la dissipation d'énergie due aux résistances à l'avancement sous contrôle de vitesse (résistance au roulement, résistance de l'air) ainsi qu'aux consommateurs électriques.

2. Processus de commande du groupe motopropulseur d'un véhicule hybride selon la revendication 1, **caractérisé en ce que** la puissance du moteur électrique s'élève à $P_{EM}$ = 70 % et celle du moteur à combustion à $P_{VM}$ = 30 % du total disponible de la puissance d'entraînement théorique.

3. Processus de commande du groupe motopropulseur d'un véhicule hybride selon la revendication 1 ou 2, **caractérisé en ce que** la puissance P(v) du moteur à combustion (8) commuté ou sa consommation en carburant C(v) nécessaire au dépassement de compensation de la résistance au roulement et de la résistance de l'air soit pilotée par une ligne caractéristique de commande de dissipation d'énergie sous contrôle de vitesse P(v) de la fonction P(v)[watt] = $C_1$ X V + $C_2$ x $v^3$[Watt] avec $C_1$ = 56,41[N] et $C_2$ = 0,19 [kg/m].

4. Processus de commande du groupe motopropulseur d'un véhicule hybride selon une des revendications précédentes **caractérisé en ce que** d'autres lignes caractéristiques de commande de dissipation d'énergie $P_n$ (v) ou de consommation de carburant $C_n$(v) soient réglables proportionnellement à la première ligne caractéristique de commande de dissipation d'énergie avec n = 1,2,3,... pour la commande directe dictant si et dans quelle mesure le moteur à combustion (8) doit être commuté ainsi que pour la commande indirecte qui en dépend d'une opération de recharge ou de décharge voulue de l'accumulateur d'énergie électrique(14)au moyen d'un dispositif de numérotation (11), de préférence un potentiomètre, ces réglages étant de préférence sur une plage de $P_1$(v) = P(v) - 50 % x P(v) inférieur jusqu'à $P_{max}$(v)= P(v) + 20 % x P(v)supérieur au même ou $C_1$(v)= C(v)- 50 % x C(v) inférieur jusqu'à $C_{max}$(v)= C(v) + 20 % x C(v) supérieur au même.

5. Processus de commande du groupe motopropulseur d'un véhicule hybride selon une des revendications précédentes **caractérisé en ce que** le moteur à combustion (8) est un moteur diesel exploité avec un carburant diesel, de préférence équipé d'un compresseur turbo avec recyclage des gaz d'échappement.

Fig. 1

## Power[KW]

Fig.2

EP 3 458 327 B1

# Fuel Consumption

Fig. 3

# Fahrzyklus

Fig. 4

EP 3 458 327 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130218383 A1
- EP 0903258 A2
- DE 102011002742 A1
- DE 10260435 A1
- DE 10038181 B4
- DE 4324010 C2

**In der Beschreibung aufgeführte Nicht-Patentliteratur**

- **BOSCH.** Kraftfahrtechnisches Taschenbuch. 2014, 774 ff